# EUROPÄISCHE PATENTANMELDUNG

(11) **EP 4 427 870 A1**
(43) Veröffentlichungstag der Anmeldung: **11.09.2024**
(21) Anmeldenummer: 23160162.6
(22) Anmeldetag: 06.03.2023
(51) Int. Cl.: B23B 31/08, B23B 51/10

(54) **WERKZEUG ZUM RÜCKWÄRTSENTGRATEN**

(71) Anmelder: Gühring KG, 72458 Albstadt (DE)
(72) Erfinder: Gauggel, Christian, 72469 Heinstetten (DE)
(74) Vertreter: Gleim, Christian Ragnar

(57) **Zusammenfassung**

Die Erfindung betrifft ein Werkzeug zum Rückwärtsentgraten einer Bohrung eines Werkstückes, umfassend einen Schaft (2) mit einem Schneidkopf (1) mit einer umlaufenden Schneide (11) und einem Wälzlager (12), mit einem Innenring (121), der fest auf dem Schaft (2), an den Schneidkopf (1) angrenzend sitzt und einem Außenring (122) der zur axialen Abstützung des Schneidkopfes (1) an dem Werkstück dient, wobei eine einfachwirkende Zylindereinheit (3) vorhanden ist, umfassend einen Zylinder (30), einen darin geführten Kolben (31) und eine Druckfeder (32), wobei an einem dem Schneidkopf (1) abgewandten Ende des Schafts (2) der Kolben (31) angebracht ist und die Druckfeder (32) koaxial, den Schaft (2) umschließend, im Zylinder (30) angeordnet ist, wodurch sich, bei einer axial einwirkenden Zugkraft auf den Zylinder (3), der Zylinder (3) relativ zu dem Kolben (31) bewegt und eine der Zugkraft entgegenwirkende Federkraft hervorgerufen wird, wodurch eine Schneidkraft, die von der Schneide (11) auf ein zu bearbeitendes Werkstück übertragen wird, reguliert wird.

## Beschreibung

Die Erfindung betrifft ein Werkzeug zum Rückwärtsentgraten einer Bohrung eines Werkstücks, umfassend einen Schaft mit einem Schneidkopf mit einer umlaufenden Schneide und einem Wälzlager, mit einem Innenring, der fest auf dem Schaft, an den Schneidkopf angrenzend sitzt und einem Außenring, der zur axialen Abstützung des Schneidkopfes an dem Werkstück dient.

Werkzeuge zum Rückwärtsentgraten werden nach einer erfolgten Bohrung durch ein entstandenes Bohrloch geführt, um das Bohrloch an dem dem Werkzeug abgewandten Ende zu Entgraten, also bei der Bohrung entstandene Kanten, Auffaserungen oder Splitter zu entfernen. Werkzeuge zum Rückwärtsentgraten sind im Stand der Technik bereits mit unterschiedlichen Schneidköpfen offenbart.

In der DE 10 2010 014 022 A1 ist ein Senkwerkzeug zum Rückwärtsentgraten offenbart, das einen Anschlag aufweist, der an einer Oberfläche eines Werkstücks anliegt und ein Lager mit einem Innenring und einem Außenring umfasst. Durch das Lager, das als Wälzlager ausgebildet sein kann, kann ein schneidender Abschnitt gegenüber dem Anschlag verdreht werden und so ein Bohrloch entgratet werden.

Nachteilig bei aus dem Stand der Technik bekannten Werkzeugen zum Rückwärtsentgraten ist, dass eine an der zu entgratenden Oberfläche wirkende Schneidkraft nur über eine auf das Werkzeug ausgewirkte Zugkraft reguliert werden kann. Wenn die ausgewirkte Zugkraft zu groß oder nicht über den gesamten Entgratungsprozess konstant ist, kann das zu Unregelmäßigkeiten bei der Bearbeitung bis hin zur Beschädigung des Werkstücks führen.

Es ist daher die Aufgabe der Erfindung, ein Werkzeug zum Entgraten bereitzustellen, bei dem eine von dem Werkzeug auf ein Werkstück ausgeübte Schneidkraft reguliert werden kann.

Die Aufgabe wird durch ein Werkzeug zum Rückwärtsentgraten einer Bohrung eines Werkstückes, umfassend einen Schaft mit einem Schneidkopf mit einer umlaufenden Schneide und einem Wälzlager, mit einem Innenring, der fest auf dem Schaft, an den Schneidkopf angrenzend sitzt und einem Außenring der zur axialen Abstützung des Schneidkopfes an dem Werkstück dient, wobei eine einfachwirkende Zylindereinheit vorhanden ist, umfassend einen Zylinder, einen darin geführten Kolben und eine Druckfeder, wobei an einem dem Schneidkopf abgewandten Ende des Schafts der Kolben angebracht ist und die Druckfeder koaxial, den Schaft umschließend, im Zylinder angeordnet ist, wodurch sich, bei einer axial einwirkenden Zugkraft auf den Zylinder, der Zylinder relativ zu dem Kolben bewegt und eine der Zugkraft entgegenwirkende Federkraft hervorgerufen wird, wodurch eine Schneidkraft, die von der Schneide auf ein zu bearbeitendes Werkstück übertragen wird, reguliert wird, gelöst.

Im Sinne der Erfindung beziehen sich die Begriffe "axial" und "koaxial" auf eine Achse, die mittig durch den Schaft verläuft.

Die Zugkraft wird von einem Anwender auf den Zylinder entlang der Achse ausgewirkt und von dem Zylinder über den Kolben auf den Schaft und die mit dem Schaft verbundene Schneide übertragen. Der Zugkraft entgegen wirkt die Federkraft, wodurch die von die von der Schneide auf das Werkstück übertragene Schneidkraft reguliert wird.

Um den Schaft durch ein Bohrloch zu führen, kann der Schaft aus zwei miteinander verbindbaren Teilen bestehen. In diesem Fall wird zunächst nur ein Teil des Schafts, der mit dem Kolben verbunden ist, durch das Bohrloch geführt und der andere Teil des Schafts, an dem der Schneidkopf angebracht ist, anschließend auf den durch das Bohrloch geführten Teil des Schafts aufgesetzt.

Vorzugsweise ist die Druckfeder vorgespannt, sodass bei einer axialen Krafteinwirkung die Druckfeder über einen Federweg komprimiert wird, indem die Federkennlinie der Druckfeder einen linearen Bereich aufweist.

Wie die auf das Werkstück zu übertragende Schneidkraft reguliert wird, hängt von der Ausgestaltung der Druckfeder ab. Vorzugsweise ist die Druckfeder so ausgelegt, dass die Schneidkraft, zumindest in dem Bereich, in dem die Federkennlinie der Druckfeder linear ist, konstant ist.

Der Federweg der Druckfeder beträgt bevorzugt mindestens 30 mm. Besonders bevorzugt beträgt der Federweg zwischen 30 mm und 35 mm. Ist der Federweg zu kurz, ist der lineare Bereich der Federkennlinie zu klein und die Schneidkraft kann nur bei verhältnismäßig geringen Zugkräften reguliert werden.

Vorteilhaft sind an dem Kolben wenigstens ein nach außen ragender Stift und in dem Zylinder eine axial verlaufende Nut vorhanden, in die der wenigstens eine Stift eingreift, um eine Drehung des Kolbens relativ zum Zylinder zu verhindern. Es können, wenn mehrere nach außen ragende Stifte vorhanden sind, auch mehrere axial verlaufende Nuten vorhanden sein.

Vorzugsweise weist der Zylinder einen Deckel auf, an dem der Zylinder geöffnet werden kann. Das Öffnen des Zylinders ist insbesondere zum Wechsel von Verschleißteilen, wie der Druckfeder oder den im Zylinder befindlichen Stiften, notwendig. Der Deckel kann mit dem Zylinder durch eine Steckverbindung oder durch Verbindungselemente, beispielsweise durch Schrauben, verbunden sein.

Vorteilhaft ist der Schaft verdrehsicher in dem Kolben fixiert. Dazu kann an dem Schaft eine Planfläche vorhanden sein und in dem Kolben ein Gewindestift vorhanden sein, der an die Planfläche anschraubbar ist, um den Schaft verdrehsicher in dem Kolben zu fixieren. Durch das Lösen des Gewindestifts kann der Schaft aus dem Kolben und dem Zylinder entfernt werden.

Das Wälzlager kann vorzugsweise als Kugellager, insbesondere als Rillenkugellager ausgelegt sein.

Nachfolgend wird die Erfindung anhand von einem Ausführungsbeispiel unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für das Ausführungsbeispiel beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: eine Seitenansicht eines Schnitts durch ein Werkzeug zum Rückwärtsentgraten,
- Fig. 2: eine Ansicht des Werkzeugs zum Rückwärtsentgraten,
- Fig. 3: eine Draufsicht auf das Werkzeug zum Rückwärtsentgraten, und
- Fig. 4: eine Draufsicht auf einen Schnitt durch das Werkzeug zum Rückwärtsentgraten.

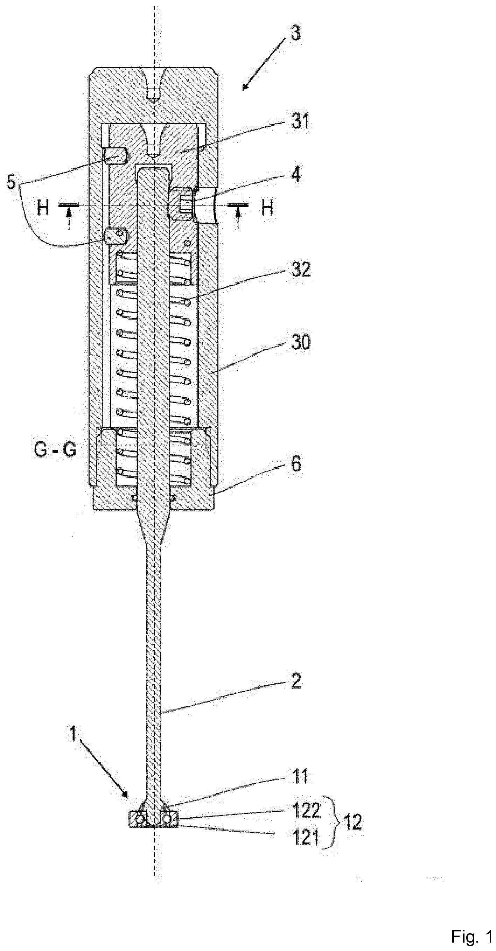

**Fig. 1** zeigt ein Werkzeug zum Rückwärtsentgraten. Das Werkzeug zum Rückwärtsentgraten umfasst einen Schneidkopf 1 mit einer umlaufenden Schneide 11 und einem Wälzlager 12, sowie einen Schaft 2. Die Schneide 11 ist formschlüssig mit dem Schaft 2 verbunden. Das Wälzlager 12 umfasst einen Innenring 121, der fest auf dem Schaft 2 sitzt und an den Schneidkopf 1 angrenzt, sowie einen Außenring 122. Der Außenring 122 dient zur axialen Abstützung des Schneidkopfes 1 an dem Werkstück. Der Außenring 122 weist einen größeren Durchmesser als der Innenring 121 auf. Das Werkzeug zum Rückwärtsentgraten umfasst weiterhin eine einfachwirkende Zylindereinheit 3 mit einem Zylinder 30, einem Kolben 31 sowie einer Druckfeder 32. Der Kolben 31 ist in dem Zylinder 30 geführt und an einem dem Schneidkopf 1 abgewandten Ende des Schafts 2 angebracht. Die Druckfeder 32 ist koaxial zum Schaft 2, den Schaft 2 umschließend, im Zylinder 30 angeordnet.

Bei einer axial auf den Zylinder 30 einwirkenden Zugkraft wird der Zylinder 30 relativ zu dem Kolben 31 bewegt und eine der Zugkraft entgegenwirkende Federkraft wirkt auf den Zylinder 30, wodurch eine Schneidkraft, die von der Schneide 11 auf ein zu bearbeitendes Werkstück übertragen wird, reguliert wird. Die Druckfeder 32 ist vorgespannt, sodass bei einer axialen Krafteinwirkung entlang einer in Fig. 1 eingezeichneten Achse, die durch den Schaft 2 verläuft, die Druckfeder 32 über einen Federweg komprimiert wird, indem die Federkennlinie der Druckfeder 32 einen linearen Bereich aufweist. Wenn die Druckfeder 32 zu stark komprimiert wird, also die Zugkraft zu groß ist, ist der Zusammenhang zwischen Federkraft und Federweg nicht mehr linear.

An dem Kolben 31 sind zwei nach außen ragende Stifte 5 und in dem Zylinder 30 eine axial verlaufende Nut vorhanden, in die die Stifte 5 eingreifen. Dadurch wird eine Drehung des Kolbens 31 relativ zum Zylinder 30 verhindert.

Der Zylinder 30 weist einen Deckel 6 auf, an dem der Zylinder 30 geöffnet werden kann. Der Zylinder 30 kann geöffnet werden, um Teile im Zylinder 30 auszutauschen.

Der Schaft 2 ist in dem Kolben 31 verdrehsicher fixiert, indem ein Gewindestift 4 in den Kolben 31 so eingeschraubt ist, dass er an einer Planfläche an dem Kolben 31 anliegt.

Ein Durchmesser des Schafts 2 ist nicht über seine gesamte Länge konstant. Der vom Zylinder 30 umschlossene Teil des Schafts 2 sowie die am Schaft 2 befindliche Schneide 11 weisen einen größeren Durchmesser als der restliche Schaft 2 auf. Der Schaft 2 kann aus einem einzigen Teil monolithisch gebildet sein oder aus mehreren, miteinander verbindbaren Teilen bestehen.

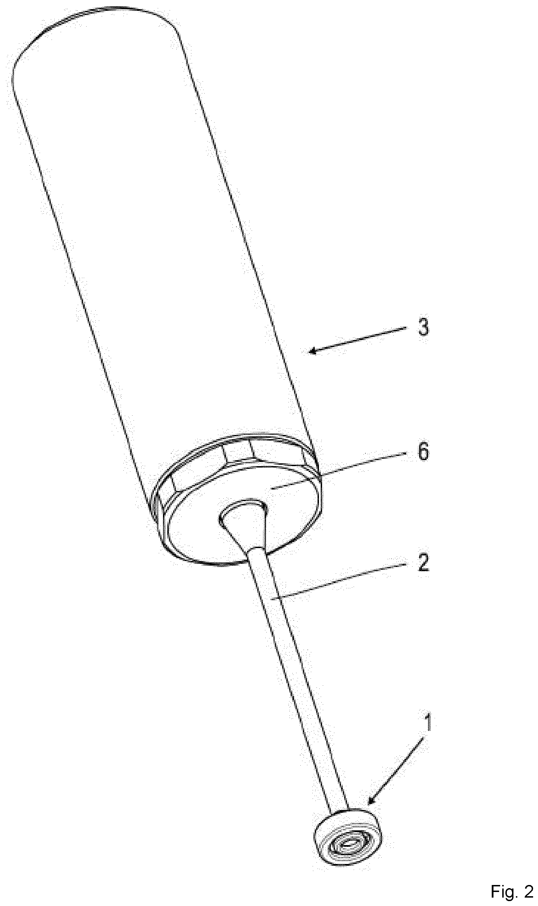

In **Fig. 2** ist das Werkzeug zum Rückwärtsentgraten in einer Ansicht von außen dargestellt. In Fig. 2 sind die in der Zylindereinheit 3 befindlichen Teile des Werkzeugs zum Rückwärtsentgraten nicht sichtbar. Der Zylinder 30 wird durch den Deckel 6 abgeschlossen. Der Deckel 6 weist eine Ausnehmung für den Schaft 2 auf. An der Ausnehmung des Deckels 6 können ein oder mehrere O-Ringe vorhanden sein, um ein direktes Anliegen des Schafts 2 am Deckel 6 zu verhindern. Dadurch kann verhindert werden, dass sich der Schaft 2 im Zylinder 30 verkantet.

Der Zylinder 30 wird durch den Deckel 6 nicht luftdicht abgeschlossen. Wenn der Zylinder 30 durch den Deckel 6 luftdicht abgeschlossen wäre, würde die Federkraft mit einer der Zugkraft entgegenwirkenden pneumatischen Kraft überlagert werden, die nichtlinear ist.

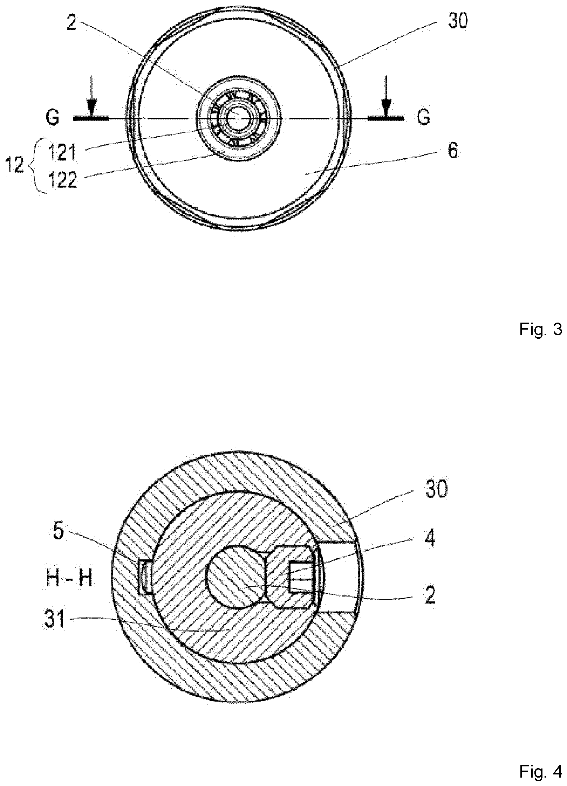

**Fig. 3** zeigt eine Draufsicht auf das Werkzeug zum Rückwärtsentgraten. In der in Fig. 3 gezeigten Ansicht ist der Zylinder 30 mit dem Deckel 6 im Hintergrund dargestellt. Im Vordergrund ist der Schneidkopf 1 mit dem Wälzlager 12 gezeigt.

Einen Schnitt durch das Werkzeug zum Rückwärtsentgraten zeigt **Fig. 4**. Die Nut, in die der Stift 5 eingreift ist in Fig. 4 sichtbar. In Fig. 4 ist außerdem die Planfläche an dem Schaft 2 gezeigt, an der der Gewindestift 4 anliegt.

### Bezugszeichenliste

- 1: Schneidkopf
- 11: Schneide
- 12: Wälzlager
- 121: Innenring
- 122: Außenring
- 2: Schaft
- 3: Zylindereinheit
- 30: Zylinder
- 31: Kolben
- 32: Druckfeder
- 4: Gewindestift
- 5: Stift
- 6: Deckel

## Patentansprüche

1. Werkzeug zum Rückwärtsentgraten einer Bohrung eines Werkstückes, umfassend
- einen Schaft (2) mit einem Schneidkopf (1) mit einer umlaufenden Schneide (11) und einem Wälzlager (12), mit einem Innenring (121), der fest auf dem Schaft (2), an den Schneidkopf (1) angrenzend sitzt und einem Außenring (122), der zur axialen Abstützung des Schneidkopfes (1) an dem Werkstück dient **dadurch gekennzeichnet, dass** eine einfachwirkende Zylindereinheit (3) vorhanden ist, umfassend einen Zylinder (30), einen darin geführten Kolben (31) und eine Druckfeder (32), wobei
- an einem dem Schneidkopf (1) abgewandten Ende des Schafts (2) der Kolben (31) angebracht ist und die Druckfeder (32) koaxial, den Schaft (2) umschließend, im Zylinder (30) angeordnet ist, wodurch sich, bei einer axial einwirkenden Zugkraft auf den Zylinder (30), der Zylinder (30) relativ zu dem Kolben (31) bewegt und eine der Zugkraft entgegenwirkende Federkraft hervorgerufen wird, wodurch eine Schneidkraft, die von der Schneide (11) auf ein zu bearbeitendes Werkstück übertragen wird, reguliert wird.

2. Werkzeug nach Anspruch 1, **dadurch gekennzeichnet, dass** die Druckfeder (32) vorgespannt ist, sodass bei einer axialen Krafteinwirkung die Druckfeder (32) über einen Federweg komprimiert wird, indem die Federkennlinie der Druckfeder (32) einen linearen Bereich aufweist.

3. Werkzeug nach Anspruch 3, **dadurch gekennzeichnet, dass** der Federweg mindestens 30 mm beträgt.

4. Werkzeug nach einem der Ansprüche 1 bis 3, **dadurch gekennzeichnet, dass** an dem Kolben (31) wenigstens ein nach außen ragender Stift (5) und in dem Zylinder (30) eine axial verlaufende Nut vorhanden sind, in die der wenigstens eine Stift (5) eingreift, um eine Drehung des Kolbens (31) relativ zum Zylinder (30) zu verhindern.

5. Werkzeug nach einem der Ansprüche 1 bis 4, **dadurch gekennzeichnet, dass** der Zylinder (30) einen Deckel (6) aufweist, an dem der Zylinder (30) geöffnet werden kann.

6. Werkzeug nach einem der Ansprüche 1 bis 5, **dadurch gekennzeichnet, dass** der Schaft (2) verdrehsicher in dem Kolben (31) fixiert ist.

7. Werkzeug nach Anspruch 6, **dadurch gekennzeichnet, dass** an dem Schaft (2) eine Planfläche vorhanden ist und in dem Kolben (31) ein Gewindestift (4) vorhanden ist, der an die Planfläche anschraubbar ist, um den Schaft (2) in dem Kolben (31) zu fixieren.

8. Werkzeug nach einem der Ansprüche 1 bis 7, **dadurch gekennzeichnet, dass** das Wälzlager (12) ein Kugellager ist.

9. Werkzeug nach Anspruch 8, **dadurch gekennzeichnet, dass** das Wälzlager (12) als Rillenkugellager ausgelegt ist.
